# EUROPEAN PATENT APPLICATION

(11) **EP 4 443 015 A1**
(43) Date of publication of application: **09.10.2024**
(21) Application number: 23792855.1
(22) Date of filing: 06.06.2023
(51) Int. Cl.: F16C 33/20, B32B 27/30, C08K 3/04, C08K 3/22, C08K 3/28, C08L 101/00

(54) **SLIDING MEMBER AND BEARING**

(30) Priority: 02.02.2023 JP 2023014326
(71) Applicant: Senju Metal Industry Co., Ltd, Tokyo 120-8555 (JP)
(72) Inventor: TANIBATA, Hideaki, Tokyo 120-8555 (JP); KUROSAKI, Kimihiko, Tokyo 120-8555 (JP)
(74) Representative: Pfenning, Meinig & Partner mbB
(86) International application number: PCT/JP2023/021019
(87) International publication number: WO 2024/161674

(57) **Abstract**

To provide a sliding member and a bearing whose seizure resistance and abrasion resistance are increased without using zinc compounds, and to provide a method for preventing a sliding member made of a resin composition from being seized by friction. A sliding member made of a resin composition, wherein the resin composition consists of, relative to 100 vol% of the resin composition: 1 vol% to 10 vol% of ferric oxide; 2.5 vol% to 15 vol% of barium sulfate; 1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and the balance being fluororesin, and wherein the total amount of constituents other than the fluororesin is 45 vol% or less; and a bearing including a metallic substrate, and a sliding layer made of the resin composition on the metallic substrate; and a method for preventing a sliding member made of a resin composition from being seized by friction including forming the sliding member with a resin composition containing 1 vol% to 10 vol% of ferric oxide, 2.5 vol% to 15 vol% of barium sulfate, and 55 vol% or more of fluororesin.

## Description

### TECHNICAL FIELD

The present invention relates to a sliding member slidably supporting mating members and a bearing using the sliding member. The present invention also relates to a method for preventing sliding members made of a resin composition from being seized by friction.

### BACKGROUND ART

Sliding members are required to be resistant to use in high-speed environments when applied to compressor bearings. For resin bearings, fluororesin is more self-lubricating than other resins and has a low friction coefficient and heat resistance. Additionally, the friction properties of fluororesin are improved by adding fillers or the like. Despite exhibiting good slipping properties, fluororesin is disadvantageously inferior in durability, such as abrasion resistance, to other resins. Friction materials made of fluororesin to which fillers are added exhibit good slipping properties but are less satisfactory than those of other resins in durability such as abrasion resistance.

The present applicant has proposed a sliding member including: a metallic substrate; a porous layer formed on a surface of the metallic substrate; and a sliding layer that covers the porous layer, wherein the porous layer is made of a metal itself or an alloy composition, wherein the sliding layer is made of a lead-free resin composition, wherein the resin composition contains an essential additive, optionally an optional additive, and a balance being a fluororesin, the essential additive being any one of a combination of a zinc compound and a carbon fiber, a combination of a zinc compound and an iron oxide, and a combination of a zinc compound, a carbon fiber and an iron oxide, the optional additive being only barium sulfate, wherein a total content of the essential additive and the optional additive is 10 vol% or more and 35 vol% or less in the resin composition (PTL 1). In the sliding member of PTL 1, a zinc compound, such as zinc sulfide, is added as an essential constituent to the resin composition to improve the elastic modulus and the abrasion resistance. In particular, zinc sulfide is a poisonous and deleterious substance and should not better be used for environmental reasons and to ensure safety during production.

### CITATION LIST

### PATENT LITERATURE

PTL 1: Japanese Patent No. 6677896

### SUMMARY OF INVENTION

### TECHNICAL PROBLEM

An object of the present invention is to provide a sliding member and a bearing whose seizure resistance and abrasion resistance are increased without using zinc compounds. Another object of the present invention is to provide a method for preventing a sliding member made of a resin composition from being seized by friction.

### SOLUTION TO PROBLEM

The present invention provides the following:
[1] A sliding member made of a resin composition,
   wherein the resin composition consists of, relative to 100 vol% of the resin composition:
   1 vol% to 10 vol% of ferric oxide;
   2.5 vol% to 15 vol% of barium sulfate;
   1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
   the balance being fluororesin, and
   wherein the total amount of constituents other than the fluororesin is 45 vol% or less.
[2] The sliding member according to [1], wherein the optional constituent is at least one selected from the group consisting of, relative to 100 vol% of the resin composition:
   2.5 vol% to 15 vol% of aramid;
   1 vol% to 15 vol% of polyimide;
   1 vol% to 15 vol% of ultra-high-molecular-weight polyethylene;
   1 vol% to 10 vol% of molybdenum disulfide;
   1 vol% to 10 vol% of graphite;
   1 vol% to 10 vol% of carbon fiber; and
   1 vol% to 15 vol% of polyether ether ketone (PEEK) resin.
[3] The sliding member according to [1], wherein the amount of ferric oxide is 5 vol% to 10 vol%.
[4] The sliding member made of a resin composition according to [1],
   wherein the resin composition consists of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 20 vol% of at least one optional constituent selected from the group consisting of polyimide, ultra-high-molecular-weight polyethylene, graphite, carbon fiber, and polyether ether ketone (PEEK) resin; and
   the balance being fluororesin, and
   wherein the total amount of constituents other than the fluororesin is 45 vol% or less.
[5] The sliding member made of a resin composition according to [1],
   wherein the resin composition consists of, relative to 100 vol% of the resin composition:
   1 vol% to 10 vol% of ferric oxide;
   2.5 vol% to 15 vol% of barium sulfate;
   1 vol% to 20 vol% of molybdenum disulfide;
   2.5 vol% to 15 vol% of aramid;
   1 vol% to 20 vol% of at least one optional constituent selected from the group consisting of polyimide, ultra-high-molecular-weight polyethylene, graphite, carbon fiber, and polyether ether ketone (PEEK) resin; and
   the balance being fluororesin, and
   wherein the total amount of constituents other than the fluororesin is 45 vol% or less.
[6] The sliding member according to any one of [1] to [5], wherein the sliding member is made of a metallic substrate, a porous layer formed on one surface of the metallic substrate, and the resin composition covering the porous layer.
[7] A bearing including:
   a metallic substrate; and
   a sliding layer made of a resin composition on the metallic substrate,
   wherein the resin composition consists of, relative to 100 vol% of the resin composition:
      1 vol% to 10 vol% of ferric oxide;
      2.5 vol% to 15 vol% of barium sulfate;
      1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
      the balance being fluororesin, and
      wherein the total amount of constituents other than the fluororesin is 45 vol% or less.
[8] The bearing according to [7], wherein the optional constituent is at least one selected from the group consisting of, relative to 100 vol% of the resin composition:
   2.5 vol% to 15 vol% of aramid;
   1 vol% to 15 vol% of polyimide;
   1 vol% to 15 vol% of ultra-high-molecular-weight polyethylene;
   1 vol% to 10 vol% of molybdenum disulfide;
   1 vol% to 10 vol% of graphite;
   1 vol% to 10 vol% of carbon fiber; and
   1 vol% to 15 vol% of polyether ether ketone (PEEK) resin.
[9] The bearing according to [7] or [8], wherein the metallic substrate has a porous layer on one surface of the metallic substrate, and the resin composition covers the porous layer, thereby forming the sliding layer.
[10] A method for using a resin composition in a sliding member,
   wherein the resin composition consists of, relative to 100 vol% of the resin composition:
   1 vol% to 10 vol% of ferric oxide;
   2.5 vol% to 15 vol% of barium sulfate;
   1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
   the balance being fluororesin, and
   wherein the total amount of constituents other than the fluororesin is 45 vol% or less.
[11] The method according to [10], wherein the optional constituent is at least one selected from the group consisting of, relative to 100 vol% of the resin composition:
   2.5 vol% to 15 vol% of aramid;
   1 vol% to 15 vol% of polyimide;
   1 vol% to 15 vol% of ultra-high-molecular-weight polyethylene;
   1 vol% to 10 vol% of molybdenum disulfide;
   1 vol% to 10 vol% of graphite;
   1 vol% to 10 vol% of carbon fiber; and
   1 vol% to 15 vol% of polyether ether ketone (PEEK) resin.
[12] A method for producing a sliding member, including: impregnating a porous layer formed on a surface of a metallic substrate with a resin composition and sintering the resin composition,
   wherein the resin composition consists of, relative to 100 vol% of the resin composition:
   1 vol% to 10 vol% of ferric oxide;
   2.5 vol% to 15 vol% of barium sulfate;
   1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
   the balance being fluororesin, and
   wherein the total amount of constituents other than the fluororesin is 45 vol% or less.
[13] The method according to [12], wherein the optional constituent is at least one selected from the group consisting of, relative to 100 vol% of the resin composition:
   2.5 vol% to 15 vol% of aramid;
   1 vol% to 15 vol% of polyimide;
   1 vol% to 15 vol% of ultra-high-molecular-weight polyethylene;
   1 vol% to 10 vol% of molybdenum disulfide;
   1 vol% to 10 vol% of graphite;
   1 vol% to 10 vol% of carbon fiber; and
   1 vol% to 15 vol% of polyether ether ketone (PEEK) resin.
[14] A method for preventing a sliding member made of a resin composition from being seized by friction, the method comprising: forming the sliding member with a resin composition containing:
   1 vol% to 10 vol% of ferric oxide;
   2.5 vol% to 15 vol% of barium sulfate; and
   55 vol% or more of fluororesin.

### ADVANTAGEOUS EFFECTS OF INVENTION

The present invention provides a sliding member and a bearing whose seizure resistance and abrasion resistance are increased without using zinc compounds. In particular, zinc sulfide is a poisonous and deleterious substance. The sliding member according to the present invention can ensure environmental considerations and safety during production. The present invention also provides a method for preventing sliding members made of a resin composition from being seized by friction.

### BRIEF DESCRIPTION OF DRAWINGS

[Fig. 1] Fig. 1 is a representation of the sectional structure of an exemplified sliding member according to an embodiment of the present invention.
[Fig. 2] Fig. 2 is a perspective view of an exemplified bearing according to an embodiment of the present invention.
[Fig. 3] Fig. 3 is a sectional view of an exemplified bearing according to an embodiment of the present invention.
[Fig. 4] Fig. 4 is a schematic diagram generally illustrating a seizure resistance test.
[Fig. 5] Fig. 5 is a graph representing how the temperature of test pieces changes with test time passing in the seizure resistance test.
[Fig. 6] Fig. 6 is a graph representing how torque (force required for rotation) changes with test time passing in the seizure resistance test.
[Fig. 7] Fig. 7 is a representation of the elemental distribution at the surface of a mating member before the temperature and torque of a test piece decrease rapidly in the seizure resistance test.
[Fig. 8] Fig. 8 is a representation of the elemental distribution at the surface of a mating member after the temperature and torque of a test piece have decreased rapidly in the seizure resistance test.

### DESCRIPTION OF EMBODIMENTS

### [Action]

It has been unexpectedly found that fluororesin to which Fe₂O₃ and BaSO₄ are added instead of zinc compounds forms a lubricant coating film at the surface of the mating member that is sliding, as described later in Examples. It has been found that an effect of the resulting coating film causes the frictional torque to begin to decrease at a time when a considerable amount of time has passed and suppress heat generation, thereby improving seizure resistance. It has been found that seizure resistance is unexpectedly improved without adding any zinc compound. In particular, zinc sulfide is a poisonous and deleterious substance. The sliding member according to the present invention can ensure environmental considerations and safety during production.

The formation of the coating film also increases abrasion resistance. Additionally, it has been found that the seizure resistance and abrasion resistance of the resin composition of the present invention is further increased despite adding no zinc compound by adding to the fluororesin at least one optional constituent selected from the group consisting of aramid, polyimide, ultra-high-molecular-weight polyethylene, molybdenum disulfide, graphite, carbon fiber, and polyether ether ketone (PEEK) resin.

### [Sliding Member and Bearing]

Preferred embodiments of the sliding member according to the present invention and preferred embodiments of the bearing in which the sliding member of the present invention is used will now be described below with reference to the drawings.

### <Exemplified Structure of Sliding Member of an Embodiment>

In the embodiments of the present invention, the sliding member is made of a lead-free resin composition. In a preferred embodiment, the sliding member on which the resin composition is applied is used in such a manner as to cover a metallic porous layer disposed on the surface of a metal substrate. The formulation of the resin composition will be described later.

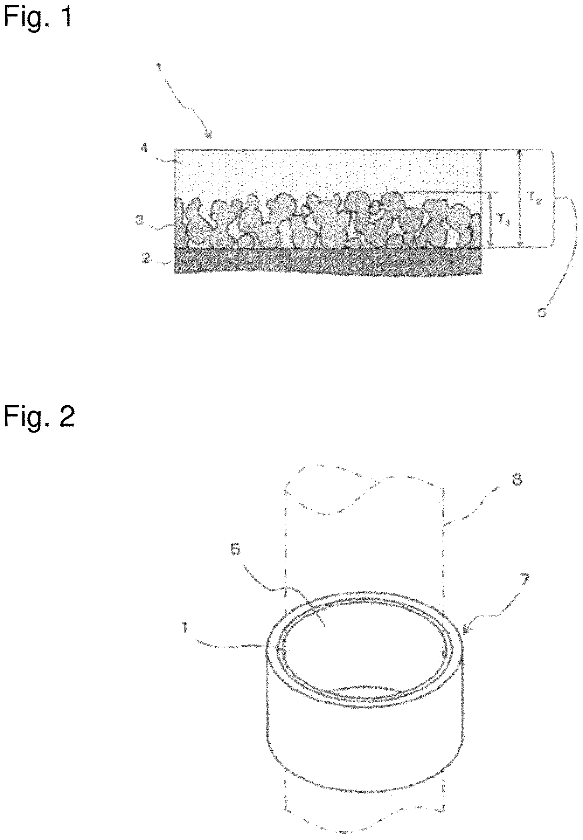

Fig. 1 is a representation of the sectional structure of an exemplified sliding member according to an embodiment of the present invention. The sliding member 1 of the present embodiment includes a metallic substrate 2, a porous layer 3 made of an elemental metal or an alloy composition on one surface of the metallic substrate 2, and a sliding layer 5 made of a resin composition 4 covering the porous layer 3.

The porous layer 3 is formed by baking a metal powder on a surface of the metallic substrate 2. In the present embodiment, a Fe (iron)-based plate is used as the metallic substrate 2. The metal powder forming the porous layer 3 contains elemental Cu or an alloy containing Cu as the major constituent, and, in the present embodiment, a Cu-Sn-based alloy powder is used.

For forming the porous layer 3, a Cu-Sn-based alloy powder is spread to a predetermined thickness over a steel sheet, and the steel sheet with the Cu-Sn-based alloy powder spread over is baked in a baking furnace. Thus, a Cu-Sn-based alloy porous layer 3 is formed to a predetermined thickness on the steel sheet.

The sliding layer 5 is formed by impregnating the porous layer 3 with the resin composition 4 with a predetermined thickness and sintering the resin composition 4 filling the porous layer 3. For forming the sliding layer 5, a predetermined amount of the resin composition 4 is supplied onto the porous layer 3 on the surface of the metallic substrate 2 and pressed against the porous layer 3 to impregnate the porous layer 3 with the resin composition 4. The amount of the resin composition 4 supplied onto the porous layer 3 is such that the resin composition 4 after being sintered, as will be described later, has a thickness to cover the porous layer 3 without exposing the porous layer 3 at the surface of the sliding layer 5.

The sliding layer 5 is formed by heating the resin composition 4 at a temperature exceeding the melting point of the resin in the resin composition 4 to fuse the resin. Heating the resin composition 4 at a predetermined temperature to form the sliding layer 5 is referred to as sintering. For example, polytetrafluoroethylene, which is used as the resin, has a melting point of 327°C. In the present embodiment, the sliding layer 5 is sintered by heating the resin composition 4 at a temperature exceeding the melting point of polytetrafluoroethylene using a sintering furnace.

In the sliding member 1 of the present embodiment, a metal powder having a particle size, as a whole, in the range of about 15 µm to 180 µm, preferably about 25 µm to 150 µm, may be used to form the porous layer 3. In the sliding member 1, the porous layer 3 formed of a metal powder with such a particle size may have a thickness T₁ of about 0.03 mm to 0.45 mm. The thickness of the porous layer 3 is such that the metal powder can be baked even when at least two metal powder particles lie on each other.

Furthermore, the sliding layer 5 of the sliding member 1 may have a thickness T₂ of about 0.05 mm to 0.50 mm. The thickness T₂ of the sliding layer 5 is the thickness from the surface of the metallic substrate 2. The thickness of the sliding layer 5, on average, is set to be larger than that of the porous layer 3 so as not to expose the porous layer 3. In the present embodiment, the thickness T₂ of the sliding layer 5 is 0.3 mm.

The substrate may be plated with various materials. For example, a copper-plated steel sheet may be used.

### <Exemplified Structure of Bearing of an Embodiment>

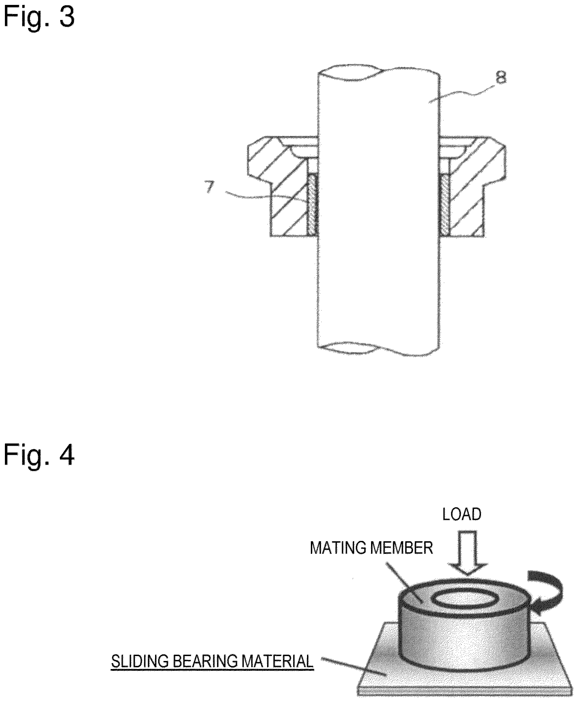

Fig. 2 is a perspective view of an exemplified bearing according to an embodiment of the present invention, and Fig. 3 is a sectional view of an exemplified bearing according to an embodiment of the present invention, illustrating an example of how to use the sliding member 1 of an embodiment of the present invention.

In an embodiment, the bearing 7 is composed of the sliding member 1, described with reference to Fig. 1, in an annular form with the sliding layer 5 inside. The bearing 7 supports a shaft 8 being a mating member at the sliding layer 5 having a cylindrical inner periphery. The bearing 7 allows the shaft 8 to slide with linear or rotational motion.

### [Resin Composition]

The resin composition 4 will now be described below.

The resin composition consists of, relative to 100 vol% of the resin composition:
1 vol% to 10 vol% of ferric oxide;
2.5 vol% to 15 vol% of barium sulfate; and
1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
the balance being fluororesin,
wherein the total amount of constituents other than the fluororesin is 45 vol% or less.

Although the optional constituent may or may not be added to the resin composition, adding the optional constituent further increases the seizure resistance and abrasion resistance of the sliding member and bearing of the present invention. The amount of the optional constituent to be added to 100 vol% of the resin composition is preferably at least one selected from the group consisting of:
2.5 vol% to 15 vol% of aramid;
1 vol% to 15 vol% of polyimide;
1 vol% to 15 vol% of ultra-high-molecular-weight polyethylene;
1 vol% to 10 vol% of molybdenum disulfide;
1 vol% to 10 vol% of graphite;
1 vol% to 10 vol% of carbon fiber; and
1 vol% to 15 vol% of polyether ether ketone (PEEK) resin.

### <Fluororesin>

The fluororesin used as the matrix resin of the resin composition 4 is well known as a synthetic resin with excellent sliding properties. Because of having sufficient heat resistance against heat generated by sliding friction, PTFE (polytetrafluoroethylene) resin, PFA (perfluoroalkoxyalkane), FEP (perfluoroethylene propene copolymer), and ETFE (ethylene tetrafluoroethylene copolymer) are often used as the matrix resin of the resin composition of sliding members.

The resin composition preferably contains PTFE as the fluororesin. When PTFE is used as a mixture with any other fluororesin, the amount of such other fluororesin in the resin composition is preferably more than 0 vol% to 20 vol% or less.

Commercially available PTFE resins include Polyflon (registered trademark) D-210C and F-201 (produced by Daikin Industries, Ltd.), Fluon (registered trademark) AD911E (produced by AGC Inc.), and Teflon (registered trademark) 31-JR and 6C-J (produced by Chemours-Mitsui Fluoroproducts Co., Ltd.).

In the resin composition 4, the total amount of constituents other than fluororesin is 45 vol% or less, preferably 10 vol% to 35 vol%. When the total amount of essential constituents other than fluororesin is more than 45 vol%, abrasion resistance tends to decrease.

### <Ferric Oxide (Fe₂O₃)>

Ferric oxide is an essential constituent of the resin composition 4 to form the sliding layer 5. The resin composition 4 containing a predetermined amount of ferric oxide can increase seizure resistance as well as abrasion resistance. The resin composition 4 needs to contain 1 vol% to 10 vol% of ferric oxide, and its preferred content is 1.5 vol% to 7.5 vol%. Morishita color series of Morishita Bengara Kogyo Co., Ltd. and the like are commercially available products. Ferric oxide is available in powder form.

### <Barium Sulfate (BaSO₄)>

Barium sulfate is an essential constituent of the resin composition 4 to form the sliding layer 5. The resin composition 4 containing a predetermined amount of barium sulfate can increase seizure resistance as well as abrasion resistance. The resin composition 4 needs to contain 2.5 vol% to 15 vol% of barium sulfate, and its preferred content is 3.0 vol% to 12.5 vol%. BF series and B series of Sakai Chemical Industry Co., Ltd. and the like are commercially available products. Barium sulfate is in powder, plate-like morphology, or the like, and its particle size is preferably 20 µm or less.

### <Aramid>

Aramid is an optional constituent of the resin composition 4 to form the sliding layer 5. Preferably, the resin composition 4 contains 2.5 vol% to 15 vol%, more preferably 2.5 vol% to 11.0 vol%, of aramid. The resin composition 4 containing a predetermined amount of aramid can increase abrasion resistance and seizure resistance. Commercially available aramid products include KEVLAR (registered trademark), produced by Du Pont-Toray Co., Ltd., and TWARON (registered trademark) of Teijin Limited. Aramid is generally in fibers and is also available in powder.

### <Polyimide>

Polyimide is an optional constituent of the resin composition 4 to form the sliding layer 5. Preferably, the resin composition 4 contains 1 vol% to 15 vol%, more preferably 2.5 vol% to 10.0 vol%, of polyimide. The resin composition 4 containing a predetermined amount of polyimide can increase abrasion resistance. Commercially available polyimide products include P84 NT, produced by Polyplastics-Evonik Corporation, and AURUM, produced by Mitsui Chemicals, Inc. Polyimide is available in powder form.

### <Ultra-High-Molecular-Weight Polyethylene>

Ultra-high-molecular-weight polyethylene is an optional constituent of the resin composition 4 to form the sliding layer 5. Preferably, the resin composition 4 contains 1 vol% to 15 vol%, more preferably 2.0 vol% to 8.0 vol%, of ultra-high-molecular-weight polyethylene. The resin composition 4 containing a predetermined amount of ultra-high-molecular-weight polyethylene can increase seizure resistance and slip resistance. Commercially available ultra-high-molecular-weight polyethylene products include MIPELON (registered trademark) (weight average molecular weight: 500,000 to 7,000,000) produced by Mitsui Chemicals, Inc., DYNEEMA (registered trademark) of TOYOBO CO., LTD., and SPECTRA (registered trademark) of Honeywell International, Inc. Ultra-high-molecular-weight polyethylene powder having a d50 particle size of, for example, 30 µm or less may be used.

### <Molybdenum Disulfide>

Molybdenum disulfide is an optional constituent of the resin composition 4 to form the sliding layer 5. Preferably, the resin composition 4 contains 1 vol% to 10 vol%, more preferably 2.0 vol% to 8.0 vol%, of molybdenum disulfide. The resin composition 4 containing a predetermined amount of molybdenum disulfide can reduce friction drag. Commercially available products include H/G MoS2, produced by Taiyo Koko Co., Ltd., and molybdenum disulfide powder series, produced by Daizo Corporation. Molybdenum disulfide is available in powder form.

### <Graphite>

Graphite is an optional constituent of the resin composition 4 to form the sliding layer 5. Preferably, the resin composition 4 contains 1 vol% to 10 vol%, more preferably 2.0 vol% to 7.5 vol%, of graphite. The resin composition 4 containing a predetermined amount of graphite can reduce friction drag. GRAPHITE POWDER series of Nippon Graphite Industries, Co., Ltd. is a commercially available product. Graphite is available in powder form.

### <Carbon Fiber>

Carbon fiber is used as a functionalizing and reinforcing material in the resin composition 4 to form the sliding layer 5 that comes into contact with a mating member directly or using a fluid such as oil. Preferably, the resin composition 4 contains 1 vol% to 10 vol%, more preferably 2.5 vol% to 7.5 vol%, of carbon fiber. Preferably, the carbon fiber has a fiber diameter of 5 µm to 20 µm, a fiber length of 10 µm to 150 µm, and an aspect ratio of 2 to 20.

### <Polyether Ether Ketone (PEEK) Resin>

PEEK resin is an optional constituent of the resin composition 4 to form the sliding layer 5. Preferably, the resin composition 4 contains 1 vol% to 15 vol%, more preferably 2.0 vol% to 7.0 vol%, of PEEK resin. The resin composition 4 containing a predetermined amount of PEEK resin can increase abrasion resistance. VESTAKEEP, produced by Polyplastics-Evonik Corporation, or the like is a commercially available product. PEEK resin is available in, for example, a powder form with an average particle size of about 20 µm.

### <Other Metal Oxides>

Metal oxides other than ferric oxide (Fe₂O₃), such as silicon dioxide and triiron tetroxide (Fe₃O₄), may optionally be added to the resin composition 4 to form the sliding layer 5. Preferably, the resin composition 4 contains 1 vol% to 10 vol%, more preferably 1.0 vol% to 4.0 vol%, of other metal oxide(s). The resin composition 4 containing a predetermined amount of metal oxide(s) can increase abrasion resistance. Commercially available other metal oxides include SUNSPHERE series, produced by AGC Si-Tech Co., Ltd., and Morishita Color Fe3O4, produced by Morishita Bengara Kogyo Co., Ltd. Other metal oxides are available in powder form. For the particle size, SUSPHERE series has an average particle size of 30 µm or less.

### <Specific Examples of Resin Composition>

The resin composition of the present invention may be varied in formulation depending on the application, shape, and use conditions of the sliding member to be used. Specific embodiments of formulations will be presented below with the numbers of formulations prepared in Examples. The example number of each formulation corresponds to the Example number listed in Table 1.
(1) Composition (Example 2) close to an existing mass-produced product using CuS₂, intended to produce the effects (in seizure resistance, abrasion resistance, etc.) of using a combination of iron oxide and barium sulfate instead of CuS₂
   Composition consisting of, relative to 100 vol% of the resin composition:
   1 vol% to 10 vol% of ferric oxide;
   2.5 vol% to 15 vol% of barium sulfate;
   1 vol% to 10 vol% of molybdenum disulfide;
   1 vol% to 10 vol% of graphite; and
   the balance being fluororesin,
   wherein the total amount of constituents other than the fluororesin is 45 vol% or less.
(2) Compositions (Examples 3, 4, 6, 7, 8, and 16) intended to improve seizure resistance and abrasion resistance
   Compositions consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 10 vol% of molybdenum disulfide; and
   the balance being fluororesin,
   wherein the total amount of constituents other than the fluororesin is 45 vol% or less.
(3) Composition (Example 9) intended to increase seizure resistance by using ultra-high-molecular-weight polyethylene
   Composition consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 15 vol% of ultra-high-molecular-weight polyethylene; and
   the balance being fluororesin,
   wherein the total amount of constituents other than the fluororesin is 45 vol% or less.
(4) Compositions (Examples 10 and 11) using molybdenum disulfide to increase seizure resistance even when ultra-high-molecular-weight polyethylene content is small
   Composition consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 15 vol% of ultra-high-molecular-weight polyethylene;
   1 vol% to 10 vol% of molybdenum disulfide; and
   the balance being fluororesin,
   wherein the total amount of constituents other than the fluororesin is 45 vol% or less.
(5) Compositions (Examples 12 and 18) intended to improve abrasion resistance by adding polyimide Composition consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 15 vol% of polyimide; and
   the balance being fluororesin,
   wherein the total amount of constituents other than the fluororesin is 45 vol% or less.
(6) Composition (Example 13) intended to increase abrasion resistance by using PEEK
   Composition consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 10 vol% of molybdenum disulfide;
   1 vol% to 15 vol% of polyether ether ketone (PEEK) resin; and
   the balance being fluororesin,
   wherein the total amount of constituents other than the fluororesin is 45 vol% or less.
(7) Compositions (Examples 14, 15, 17, and 19) intended to increase sliding properties and abrasion resistance by using molybdenum disulfide and polyimide
   Composition consisting of, relative to 100 vol% of the resin composition:
   1 vol% to 10 vol% of ferric oxide;
   2.5 vol% to 15 vol% of barium sulfate;
   2.5 vol% to 15 vol% of aramid;
   1 vol% to 15 vol% of polyimide;
   1 vol% to 10 vol% of molybdenum disulfide; and
   the balance being fluororesin,
   wherein the total amount of constituents other than the fluororesin is 45 vol% or less.

### [Method for Preventing Sliding Member from Seizing Up]

The present invention also relates to a method for preventing friction-induced seizure of sliding members that slidably support the mating member by forming the sliding member using a resin composition.

The method prevents a sliding member made of a resin composition from being seized by friction. The method includes forming the sliding member using a resin composition containing:
1 vol% to 10 vol% of ferric oxide;
2.5 vol% to 15 vol% of barium sulfate; and
55 vol% or more of fluororesin.

It has been unexpectedly found that a synergistic effect of combined use of ferric oxide (Fe₂O₃) and barium sulfate (BaSO₄) in the resin composition provides higher seizure resistance and more reduces the amount of abrasion than adding only either ferric oxide (Fe₂O₃) or barium sulfate (BaSO₄), as described in detail later in Examples. The method described above is based on this synergistic effect.

Sliding members made of resin compositions exhibit lower strength and heat resistance than those made of other materials. The method of the present invention for preventing seizure is extremely useful. The method of the present invention is useful for the use where the sliding member temperature is increased by more than 100°C by friction, the use where the sliding member receives a pressure of 10 MPa or more, and other use where sliding members made of resin compositions are difficult to use, particularly use as bearings.

When the method of the present invention is applied to bearings, the method produces special effects of increasing the service life under normal sliding environments and increasing the durability, thus enabling bearings to be used in high-speed motion environments or severe sliding environments at high loads.

In the method of the present invention for preventing seizure, the sliding member is made of a resin composition. Preferred embodiments of the resin composition are those that have been described herein for the sliding member and bearing of the present invention. In the method of the present invention, the amount of abrasion of the sliding member made of the resin composition can be reduced by adding one or more optional materials to the resin composition. For forming the sliding member, general molding methods for thermoplastic and thermosetting resins may be applied, and examples include injection molding, extrusion molding, and compression molding.

In the method of the present invention, the sliding member may be in any shape employed in the industry, such as plate-like, cylindrical (outer and inner peripheries), curved surface, or spherical.

### EXAMPLES

While the present invention will be specifically described below in the form of Examples, the scope of the present invention is not limited to the following Examples. In the following Examples, vol% represents a proportion when the total resin composition is 100 vol%.

Test pieces were prepared using the existing mass-produced product and resin compositions of Examples 1 to 19 presented in Table 1, and the test pieces were tested for seizure resistance and abrasion resistance in the following manner.

### (1) Seizure Resistance Test

Fig. 4 schematically illustrates the way of the test. The test piece with the dimensions below was fixed to the test stand of the testing machine described below, and a cylindrical mating ring with the dimensions below was rotated while pressing the test piece from above under the following test conditions. The pressing load was increased in steps of 10 minutes, and the load at which the test piece temperature reached 200°C or more was taken as the seizure load (evaluated in terms of seizure surface pressure (unit: MPa)).
Testing machine: High-pressure atmosphere friction and abrasion tester (Kobelco Machinery Engineering Co., Ltd.)
Test piece dimensions: 45 mm × 45 mm × 1.0 mm to 2.5 mm
Cylindrical mating ring dimensions: outer diameter 30 mm × inner diameter 24 mm, contact area with test piece (254.5 mm²)
Substrate: Cu-plated cold-rolled steel sheet (SPCC)
Porous layer: formed of CuSn powder
Sliding layer thickness: 0.3 ± 0.1 mm
Cylindrical mating ring material: Carbon steel S45C
Test conditions:
   Speed (0.25 m/s)
   Number of revolutions (177 rpm)
   Load (increasing by 50 kgf in increments of 10 minutes)
   Atmosphere (dry)

In the seizure resistance test, the seizure surface pressure is desirably 30 MPa or more for applications requiring that compressor sliding members are durable when used in high-speed environments.

### (2) Abrasion Resistance Test

The test was conducted under the following conditions and the decrease of the test piece thickness was measured as the amount of abrasion.
Testing machine: High-pressure atmosphere friction and abrasion tester (Kobelco Machinery Engineering Co., Ltd.)
Test piece dimensions: 45 mm × 45 mm × 1.0 mm to 2.5 mm
Cylindrical mating ring dimensions: outer diameter 30 mm × inner diameter 24 mm, contact area with test piece (254.5 mm²)
Substrate: Cu-plated SPCC steel sheet
Porous layer: formed of CuSn powder
Sliding layer thickness: 0.3 ± 0.1 mm
Cylindrical mating ring material: Carbon steel S45C
Test conditions:
   Speed (1 m/s)
   Number of revolutions (707 rpm)
   Test time (10 min)
   Load (2545 N)
   Atmosphere (dry)

In the abrasion resistance test, the amount of abrasion is desirably 0.040 mm or less for applications requiring that compressor sliding members are durable when used in high-speed environments.

The test results are presented in Table 1.

**[Table 1]**

| | Content vol% | | | | | | | | | | | Property data | |
|---|---|---|---|---|---|---|---|---|---|---|---|---|---|
| Example No. | PTFE | C | CuS2 | Fe2O3 | BaSO4 | Aramid | MoS2 | Ultra-high-molecular-weight polyethylene | PEEK | Polyimide | Total | Seizure surface pressure MPa | Amount of abrasion mm |
| Existing mass-produced product | 77.8 | 4 | 10.95 | | | | 7.25 | | | | 100 | 25.0 | 0.042 |
| 1 (Comparative) | 83.75 | 4 | | 5 | | | 7.25 | | | | 100 | 24.4 | 0.051 |
| 2 | 78.75 | 4 | | 5 | 5 | | 7.25 | | | | 100 | 39.8 | 0.040 |
| 3 | 80 | | | 5 | 5 | 5 | 5 | | | | 100 | 53.0 | 0.018 |
| 4 | 80 | | | 2.5 | 7.5 | 5 | 5 | | | | 100 | 51.3 | 0.028 |
| 5 (Comparative) | 80 | | | | 10 | 5 | 5 | | | | 100 | 21.2 | 0.071 |
| 6 | 80 | | | 1.25 | 8.75 | 5 | 5 | | | | 100 | 41.4 | 0.039 |
| 7 | 80 | | | 5 | 7.5 | 2.5 | 5 | | | | 100 | 55.9 | 0.023 |
| 8 | 80 | | | 2.5 | 10 | 2.5 | 5 | | | | 100 | 50.1 | 0.037 |
| 9 | 80 | | | 2.5 | 10 | 2.5 | | 5 | | | 100 | 59.7 | 0.029 |
| 10 | 80 | | | 5 | 7.5 | 2.5 | 2.5 | 2.5 | | | 100 | 59.7 | 0.028 |
| 11 | 80 | | | 2.5 | 7.5 | 5 | 2.5 | 2.5 | | | 100 | 59.7 | 0.026 |
| 12 | 80 | | | 2.5 | 5 | 2.5 | | | | 10 | 100 | 50.1 | 0.026 |
| 13 | 80 | | | 5 | 7.5 | 2.5 | 2.5 | | 2.5 | | 100 | 40.5 | 0.023 |
| 14 | 80 | | | 5 | 7.5 | 2.5 | 2.5 | | | 2.5 | 100 | 56.8 | 0.025 |
| 15 | 70 | | | 7.5 | 11.25 | 3.75 | 3.75 | | | 3.75 | 100 | 54.9 | 0.017 |
| 16 | 70 | | | 7.5 | 11.25 | 3.75 | 7.5 | | | | 100 | 38.5 | 0.017 |
| 17 | 80 | | | 2.5 | 7.5 | 5 | 2.5 | | | 2.5 | 100 | 59.7 | 0.032 |
| 18 | 80 | | | 2.5 | 7.5 | 5 | | | | 5 | 100 | 57.8 | 0.035 |
| 19 | 74.5 | | | 2.5 | 7 | 11 | 2.5 | | | 2.5 | 100 | 49.1 | 0.027 |

Abbreviations in the Table are as follows:
PTFE represents polytetrafluoroethylene, and Polyflon D-210C (product name) was used.
C represents graphite, and CPB (product name) was used.
CuS2 represents copper disulfide, which is an existing mass-produced substance.
Fe2O3 represents ferric oxide, and MR-970D (product name) was used.
BaSO4 represents barium sulfate, and B-55 (product name) was used.
Aramid used was Twaron Powder (product name).
MoS2 represents molybdenum disulfide, and TORAYCA MLD30 (product name) was used.
Ultra-high-molecular-weight polyethylene used was MIPELON (product name).
PEEK represents polyether ether ketone, and VESTAKEEP (product name) was used.
Polyimide used was Polyimide P84 NT (product name).

The test results in Table 1 show that test pieces (Examples 2 to 4 and 6 to 19) made of the resin compositions consisting of ferric oxide (Fe₂O₃), barium sulfate (BaSO₄), some optional constituent, and the balance being fluororesin (PTFE) exhibited high surface pressures (seizure surface pressures) of 38.5 MPa to 59.7 MPa when the surface reached a seizure temperature (200°C), and small amounts of abrasion of 0.017 mm to 0.040 mm. The seizure surface pressure was higher than that (25.0 MPa) of existing mass-produced products, and the amount of abrasion was smaller than that (0.042 mm) of existing mass-produced products, suggesting that the sliding member of the present invention is superior in seizure resistance and abrasion resistance to existing mass-produced products. In contrast, test pieces (Examples 1 and 5) made of the resin compositions containing only either ferric oxide (Fe₂O₃) or barium sulfate (BaSO₄) exhibited low seizure surface pressures of 24.4 MPa and 21.2 MPa, respectively, and high amounts of abrasion of 0.051 mm and 0.071 mm, respectively, despite that the test pieces contain components such as graphite, aramid, and molybdenum disulfide. The seizure surface pressure was lower than that (25.0 MPa) of existing mass-produced products, and the amount of abrasion was larger than that (0.042 mm) of existing mass-produced products, suggesting that the sliding members, not satisfying the requirements of the present invention, are inferior in seizure resistance and abrasion resistance to existing mass-produced products.

Examples 3, 4, and 6 to 19, in which aramid was added as an optional constituent, increased abrasion resistance, exhibiting relatively small amounts of abrasion of 0.017 mm to 0.039 mm. Examples 9 to 11, in which aramid and ultra-high-molecular-weight polyethylene were added as optional constituents, exhibited a relatively high seizure surface pressure of 59.7 MPa. Example 12, in which aramid and polyimide were added as optional constituents, seizure resistance and abrasion resistance were increased, exhibiting a relatively high seizure surface pressure of 50.1 MPa and a relatively small amount of abrasion of 0.026 mm. Test results suggest that adding polyimide increases seizure resistance and abrasion resistance, that adding ultra-high-molecular-weight polyethylene improves slipping properties, and that reducing friction drag and suppressing temperature increase improve seizure resistance. Molybdenum disulfide improves heat resistance and load bearing and acts as a solid lubricant in compositions containing iron oxide or aramid, which are non-sliding materials, and fluororesin, which has good sliding properties but poor in heat resistance and load bearing. It was found that adding such molybdenum disulfide improved sliding properties.

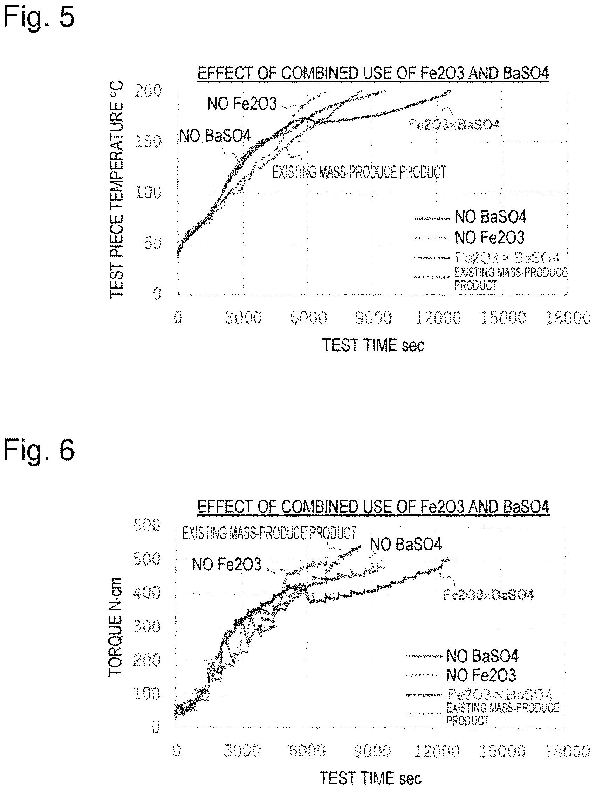

The present inventors focused on the fact that the sliding member of the present invention made of the fluororesin composition containing ferric oxide (Fe₂O₃) and barium sulfate (BaSO₄) has excellent seizure resistance and further examined the seizure resistance test results in detail. The examination results are presented in Figs. 5 and 6. Fig. 5 is a graph representing how the temperature of test pieces changes with test time passing in the seizure resistance test, and Fig. 6 is a graph representing how torque (force required for rotation) changes with test time passing in the seizure resistance test. The temperature and torque of the test pieces of the present invention drop sharply at a test time of around 6000 s, suggesting that the time taken to reach the seizure temperature of 200°C is unexpectedly long due to the temperature decrease of the test pieces. In contrast, the temperature and torque of both the test pieces made of a fluororesin composition containing only either ferric oxide (Fe₂O₃) or barium sulfate (BaSO₄) and the existing mass-produced product continue to increase with test time passing, and the temperature reaches the seizure temperature of 200°C in a relatively short time. Thus, it has been unexpectedly found that a synergistic effect of combined use of ferric oxide (Fe₂O₃) and barium sulfate (BaSO₄) provides higher seizure resistance than using only either ferric oxide (Fe₂O₃) or barium sulfate (BaSO₄).

The formulation of the compositions used in the tests depicted in Figs. 5 and 6 were as follows:
· No BaSO4: 4% of C + 5% of Fe2O3 + 7.25% of MoS2 (Example 1 in Table 1)
· No Fe2O3: 10% of BaSO4 + 5% of aramid + 5% of MoS2 (Example 5 in Table 1)
· Fe2O3 × BaSO4: 4% of C + 5% of Fe2O3 + 5% of BaSO4 + 7.25% of MoS2 (Example 2 in Table 1)
· Existing mass-produced product: 4% of C + 10.95% of CuS2 + 7.25% of MoS2 (Existing mass-produced product in Table 1)

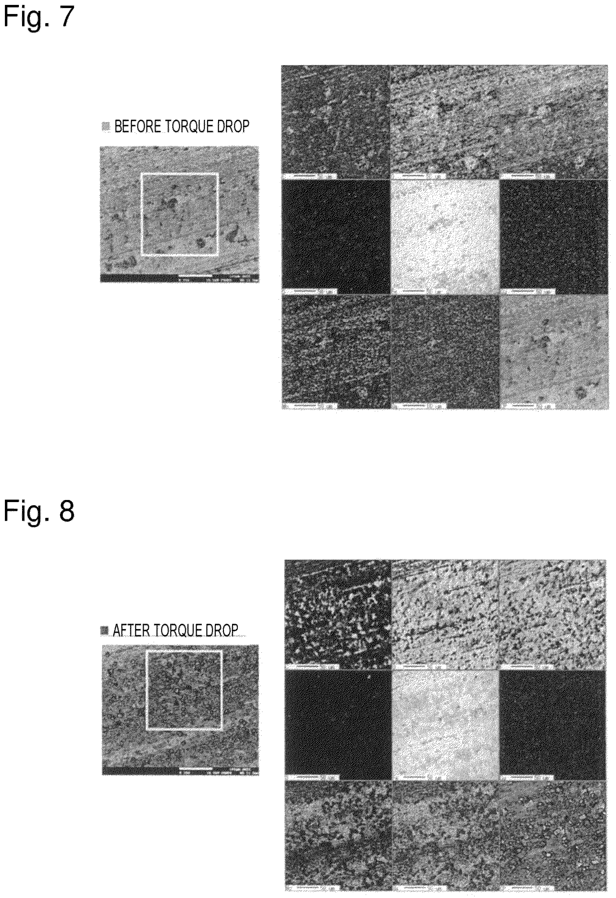

The inventors investigated the cause of the sharp drop in test piece temperature and torque at a test time of around 6000 s, as described above, and found that some constituent of the fluororesin composition migrates to the surface of the mating member and forms a coating film around the test time of 6000 s. It was thus found that when a certain amount or area of this coating film is formed on the surface of the mating member, the frictional force between the surface of the mating member and the surface of the test piece of the present invention drops sharply, resulting in a sharp drop in test piece temperature and torque. According to Fig. 7 showing the elemental distribution at the surface of the mating member before the sharp drop in test piece temperature and torque and Fig. 8 showing the elemental distribution at the surface of the mating member after the sharp drop in test piece temperature and torque (analyzer: JXA-8530F FE-EPMA (JEOL Ltd.)), the mating member before the sharp torque drop had no coating film on the surface, but the iron (Fe) element was detected in a large area at the surface of the mating member (the bright area in the center of the middle tier in Fig. 7 showing the distribution of the iron element indicates a high concentration of the iron element). In contrast, in the mating member after the sharp torque drop, the concentrations of oxygen (O), fluorine (F), and barium (Ba) increased at the surface, suggesting that the iron element at the surface of the mating member was covered with the coating film of the migrated fluororesin composition (in Fig. 8, the area in the center of the top tier showing the oxygen (O) concentration, the area in the right of the top tier showing the fluorine (F) concentration, and the area in the center of the bottom tier showing the barium (Ba) concentration all became brighter, indicating that the concentrations of these elements increased, whereas the area in the center of the middle tier showing the concentration of the iron elemental became darker, indicating that the concentration of the iron element at the surface decreased). Thus, the present inventors unexpectedly found that the fluororesin composition in the sliding member migrates to the mating member to dramatically increase the seizure resistance of the sliding member.

The present inventors conducted seizure resistance tests in the same manner as described above, using fluororesin compositions containing ferric oxide (Fe₂O₃), barium sulfate (BaSO₄), and a fluororesin, varying in ferric oxide (Fe₂O₃) content. The materials used were the same as those in Table 1: fluororesin was polytetrafluoroethylene (product name: Polyflon D-210C); ferric iron was MR-970D (product name); and barium sulfate was B-55 (product name). The results are presented in Table 2.

**[Table 2]**

| Example No. | Barium sulfate content | Ferric oxide content | Seizure surface pressure |
|---|---|---|---|
| 20 (Comparative) | 10vol% | 0vol% | 15.4 MPa |
| 21 | 10vol% | 1. 25vol% | 23.1 MPa |
| 22 | 10vol% | 2.5vol% | 25.1 MPa |
| 23 | 10vol% | 5vol% | 44.3 MPa |
| 24 | 10vol% | 7.5vol% | 36.6 MPa |
| 25 (Comparative) | 0vol% | 5vol% | 21.2 MPa |

Table 2 shows that even when the ferric oxide content is 1.25 vol% with barium sulfate content of 10 vol%, the seizure surface pressure increases, suggesting an improvement in seizure resistance. The results show that seizure surface pressure further increases at ferric oxide content of 2.5 vol% and reaches the maximum at ferric oxide content of 5 vol%, kept high even at 7.5 vol%. Further examinations have shown that the desired range of the ratio in vol% of barium sulfate content to ferric oxide content in the fluororesin composition is from 0.25: 1 to 8:1, more desirably from 0.5:1 to 4:1, still more desirably from 1:1 to 3:1, and still further desirably from 1: 1 to 2.5:1.

As described above, it is appreciated that adopting the method of the present invention prevents sliding members made of the resin composition from seizing and reduces the amount of abrasion.

## Claims

1. A sliding member made of a resin composition, wherein the resin composition consists of, relative to 100 vol% of the resin composition:
1 vol% to 10 vol% of ferric oxide;
2.5 vol% to 15 vol% of barium sulfate;
1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
the balance being fluororesin, and
wherein the total amount of constituents other than the fluororesin is 45 vol% or less.

2. The sliding member according to claim 1, wherein the optional constituent is at least one selected from the group consisting of, relative to 100 vol% of the resin composition:
2.5 vol% to 15 vol% of aramid;
1 vol% to 15 vol% of polyimide;
1 vol% to 15 vol% of ultra-high-molecular-weight polyethylene;
1 vol% to 10 vol% of molybdenum disulfide;
1 vol% to 10 vol% of graphite;
1 vol% to 10 vol% of carbon fiber; and
1 vol% to 15 vol% of polyether ether ketone (PEEK) resin.

3. The sliding member according to claim 1, wherein the amount of ferric oxide is 5 vol% to 10 vol%.

4. The sliding member made of a resin composition according to claim 1,
wherein the resin composition consists of, relative to 100 vol% of the resin composition:
1 vol% to 10 vol% of ferric oxide;
2.5 vol% to 15 vol% of barium sulfate;
2.5 vol% to 15 vol% of aramid;
1 vol% to 20 vol% of at least one optional constituent selected from the group consisting of polyimide, ultra-high-molecular-weight polyethylene, graphite, carbon fiber, and polyether ether ketone (PEEK) resin; and
the balance being fluororesin, and
wherein the total amount of constituents other than the fluororesin is 45 vol% or less.

5. The sliding member made of a resin composition according to claim 1,
wherein the resin composition consists of, relative to 100 vol% of the resin composition:
1 vol% to 10 vol% of ferric oxide;
2.5 vol% to 15 vol% of barium sulfate;
1 vol% to 20 vol% of molybdenum disulfide;
2.5 vol% to 15 vol% of aramid;
1 vol% to 20 vol% of at least one optional constituent selected from the group consisting of polyimide, ultra-high-molecular-weight polyethylene, graphite, carbon fiber, and polyether ether ketone (PEEK) resin; and
the balance being fluororesin, and
wherein the total amount of constituents other than the fluororesin is 45 vol% or less.

6. The sliding member according to any one of claims 1 to 5, wherein the sliding member is made of a metallic substrate, a porous layer formed on one surface of the metallic substrate, and the resin composition covering the porous layer.

7. A bearing comprising:
a metallic substrate; and
a sliding layer made of a resin composition on the metallic substrate,
wherein the resin composition consists of, relative to 100 vol% of the resin composition:
1 vol% to 10 vol% of ferric oxide;
2.5 vol% to 15 vol% of barium sulfate;
1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
the balance being fluororesin, and
wherein the total amount of constituents other than the fluororesin is 45 vol% or less.

8. The bearing according to claim 7, wherein the optional constituent is at least one selected from the group consisting of, relative to 100 vol% of the resin composition:
2.5 vol% to 15 vol% of aramid;
1 vol% to 15 vol% of polyimide;
1 vol% to 15 vol% of ultra-high-molecular-weight polyethylene;
1 vol% to 10 vol% of molybdenum disulfide;
1 vol% to 10 vol% of graphite;
1 vol% to 10 vol% of carbon fiber; and
1 vol% to 15 vol% of polyether ether ketone (PEEK) resin.

9. The bearing according to claim 7 or 8, wherein the metallic substrate has a porous layer on one surface of the metallic substrate, and the resin composition covers the porous layer, thereby forming the sliding layer.

10. A method for using a resin composition in a sliding member,
wherein the resin composition consists of, relative to 100 vol% of the resin composition:
1 vol% to 10 vol% of ferric oxide;
2.5 vol% to 15 vol% of barium sulfate;
1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
the balance being fluororesin, and
wherein the total amount of constituents other than the fluororesin is 45 vol% or less.

11. The method according to claim 10, wherein the optional constituent is at least one selected from the group consisting of, relative to 100 vol% of the resin composition:
2.5 vol% to 15 vol% of aramid;
1 vol% to 15 vol% of polyimide;
1 vol% to 15 vol% of ultra-high-molecular-weight polyethylene;
1 vol% to 10 vol% of molybdenum disulfide;
1 vol% to 10 vol% of graphite;
1 vol% to 10 vol% of carbon fiber; and
1 vol% to 15 vol% of polyether ether ketone (PEEK) resin.

12. A method for producing a sliding member, comprising: impregnating a porous layer formed on a surface of a metallic substrate with a resin composition and sintering the resin composition,
wherein the resin composition consists of, relative to 100 vol% of the resin composition:
1 vol% to 10 vol% of ferric oxide;
2.5 vol% to 15 vol% of barium sulfate;
1 vol% to 20 vol% of at least one optional constituent selected from the group consisting of aramid, polyimide, ultra-high-molecular-weight polyethylene, molybdenum disulfide, graphite, carbon fiber, and polyether ether ketone (PEEK) resin; and
the balance being fluororesin, and
wherein the total amount of constituents other than the fluororesin is 45 vol% or less.

13. The method according to claim 12, wherein the optional constituent is at least one selected from the group consisting of, relative to 100 vol% of the resin composition:
2.5 vol% to 15 vol% of aramid;
1 vol% to 15 vol% of polyimide;
1 vol% to 15 vol% of ultra-high-molecular-weight polyethylene;
1 vol% to 10 vol% of molybdenum disulfide;
1 vol% to 10 vol% of graphite;
1 vol% to 10 vol% of carbon fiber; and
1 vol% to 15 vol% of polyether ether ketone (PEEK) resin.

14. A method for preventing a sliding member made of a resin composition from being seized by friction, the method comprising: forming the sliding member with a resin composition containing:
1 vol% to 10 vol% of ferric oxide;
2.5 vol% to 15 vol% of barium sulfate; and
55 vol% or more of fluororesin.
